# EUROPEAN PATENT APPLICATION

(11) **EP 1 841 143 A1**
(43) Date of publication of application: **03.10.2007**
(21) Application number: 06006874.9
(22) Date of filing: 31.03.2006
(51) Int. Cl.: H04L 12/56

(54) **Efficent handover of a mobile node within a network with multiple anchor points**

(71) Applicant: MATSUSHITA ELECTRIC INDUSTRIAL CO., LTD, Kadoma-shi, Osaka 571-8501 (JP)
(72) Inventor: Velev, Genadi, 63225 Langen (DE); Schuringa, Jon, 63225 Langen (DE); Hakenberg, Rolf, 63225 Langen (DE)
(74) Representative: Grünecker, Kinkeldey, Stockmair & Schwanhäusser Anwaltssozietät

(57) **Abstract**

The invention relates to a method for managing mobility of a mobile node, which is registered to a subset of network access entities (NAE). A location update is necessary because the MN moves from a first network area served by the first router to a second network area served by the second router, keeping the same IP addresses. In response to a trigger from the MN, the second router requests from the first router information on the registered NAEs, before they are informed to route data, destined for the mobile node, to the second router. Furthermore, the global IP addresses of the MN, created based on the prefixes of the registered NAEs, are updated. To expedite the address configuration after handover, the second router generates a IP address configuration message for the MN, comprising address prefixes of only the registered NAEs, without prior reception of a router solicitation message.

## Description

### FIELD OF THE INVENTION

The invention relates to update procedures of location and IP address during handover of a mobile node, that may be registered to multiple anchor points in a network . More specifically, the invention provides a method for managing a mobility of a mobile node that keeps its IP addresses during movements between routers within a network domain. Further, the invention relates to a router for exchanging data with a mobile node. The invention also relates to a mobile node for exchanging data with a network via a router.

### TECHNICAL BACKGROUND

IP version 6 (IPv6) is a new version of the Internet Protocol, designed as the successor to IP version 4 (IPv4). The main advantage of IPv6 over IPv4 is the increased address space from 32 bits to 128 bits, in order to support more levels of addressing hierarchy and a greater number of addressable nodes. Another advantage is the improved support for extensions and options in the IP header, which allows new options to be included in the future and/or options length to be changed.

There are two mechanisms for dynamic, i.e. no manual or static, configuration of IPv6 addresses in hosts: stateful and stateless address autoconfiguration. Stateless autoconfiguration requires no manual pre-configuration of hosts, minimal configuration of routers and no additional servers in the network. The stateless mechanism allows a host to generate its own addresses using a combination of host-specific information (host/interface identifier) and information advertised by routers. Routers advertise prefixes that identify the subnet(s) associated with an IP link, while hosts generate an "interface identifier" that uniquely identifies an interface on a subnet. An address is formed by combining the advertised prefixes and unique identifier. In the absence of routers, a host can only generate link-local addresses. However, link-local addresses are solely sufficient for allowing communication among nodes attached to the same IP link.

In the stateful autoconfiguration model, hosts obtain interface addresses and/or configuration information and parameters from a server. Said server maintains a database that keeps track of which addresses have been assigned to which hosts.

It is also possible to use both stateful and stateless address autoconfiguration simultaneously. For example the IP address may be formed based on the stateless mechanism, but other IP configuration parameters, e.g. Maximum Transmission Unit size, MTU size, may be configured by a central server. The network administrator specifies which type of address configuration to use through the setting of appropriate fields in Router Advertisement (RA) messages.

When a mobile node (MN) implementing lPv6 moves from one serving access router (AR) belonging to one lP link to another serving AR belonging to a second lP link, the mobile node would receive RA messages advertising prefixes different from those used to configure the current lP addresses. In this case, the MN needs to configure new lP addresses based on the lP prefixes advertised by the new AR. The configuration of new lP addresses results in re-establishment of the IP sessions to the corresponding nodes, meaning that active IP sessions will be lost and the communication starts from the scratch. To avoid this situation, mechanism are needed to allow the MN to keep its lP addresses during movement between access routers.

One approach to keep the existing active IP sessions alive is to configure the ARs to advertise the same set of IP prefixes, so that the MN can keep using the IP addresses that have been configured at the old ARs. This approach is called network-based localized mobility management (NETLMM). In contrast to NETLMM there are other mechanisms, i.e. host-based, for mobility management in which the MN is included in the handover procedures.

This may be for example Mobile IPv6 (MlPv6). Therein, connections to mobile nodes are established with a specific home address, that is permanently assigned to the mobile node and through which the mobile node is always reachable. More specifically, each MN has configured a home IP address (HoA), which is used to identify itself, independent of the location in the Internet. The MN also configures a care-of-address (CoA), which is topologically related to the location of the MN. Whenever a MN performs a handover, a new CoA is configured and announced to the home agent (HA) and optionally to the correspondent node (CN). By binding this two different addresses at an entity in the home network, called Home Agent (HA), if the mobile node is not in its home network, it is possible to route data to the mobile node via the binding entity in the home network.

When a mobile node moves from one access router (AR), belonging to one network area to another AR, belonging to a second network area a new IP address needs to be configured for the interface performing the handover, because the new AR would advertise a different IP prefix. However, this is just for background information, as no MlPv6 mechanism are applied or necessary in this invention. Rather, a NETLMM architecture is assumed.

In NETLMM there is a network gateway responsible for the MN mobility, which is a Mobility Anchor Point (MAP), at which all MNs are registered with their current location, i.e. the AR where they currently reside. The data packets to/from the MNs are tunneled between the MAP and ARs. When a MN moves from an old AR to a new AR, the MAP is notified about the location change and starts tunnelling the MN's data packets to the new location (new AR).

The basic NETLMM architecture assumes one MAP per NETLMM domain. If the area covered by the NETLMM is large, it is however also possible to introduce additionally several MAPs in order to perform traffic separation and load balancing. Each AR in the domain can communicate to all MAPs and may establish a tunnel to each MAP individually. It may be assumed, that a different lP address prefix is assigned to each MAP. The existence of several lP prefixes does not interfere with the routing within the NETLMM domain, because the data between MAPs and ARs is tunnelled. The reason for using a separate IP prefix per MAP is that the data packets coming from outside the NETLMM domain are routed to the correct MAP, at which a given MN is attached.

Having a scenario of multiple MAPs in a NELTMM domain and a MN that is registered on several MAPs, when the MN performs a handover the corresponding MAPs should be updated with the new location. The application of existing mechanisms would lead to either sending the location update to all MAPs or consulting a central server, which has the information about the MAPs serving the MN. The first approach would result in a lot of unnecessary signaling, since location updates are sent to MAPs not involved in the MN communication. The disadvantage of the second approach would require an additional entity, a central server, in the network.

### SUMMARY OF THE INVENTION

The object of the invention is to enable an efficient handover procedure for mobile nodes in a network with multiple network access entities.

The object is solved by the subject matter of the independent claims. Advantageous embodiments of the invention are subject-matters of the dependent claims.

One aspect of the invention is to request by the second router from the first router information about the network access entities, with which the mobile node is communicating, so as to be able to inform said network access entities that the mobile node is now served by the second router. Said informing may be performed by the first or the second router.

A further aspect of the invention is that the second router may use the requested information about the network access entities to update a lifetime, of the global network-layer addresses of the mobile node, configured based on said network access entities.

According to the invention, a method for managing mobility of a mobile node within a network is provided. The network comprises a plurality of network access entities routing data to a first router and a second router. The mobile node is registered to a subset of the plurality of network access entities and moves from a first network area served by the first router to a second network area served by the second router. In response to a trigger from the mobile node, the second router requests from the first router, identification information on the subset of the plurality of network access entities. In response to the request, the subset of the plurality of network access entities are informed to route data, destined for the mobile node to the second router.

According to an embodiment of the invention, the informing of the subset of the plurality of network access entities is performed by the first router. Thereby, an efficient and fast location update is conducted.

In a further embodiment of the invention, the informing of the subset of the plurality of network access entities is performed by the second router. Thereby, the old AR is not unnecessarily involved in the informing procedure.

In an addition to the previous embodiments, the identification information on the subset of the plurality of network access entities comprises an address prefix or a global network-layer address or an identification parameter of each network access entity of the subset of the plurality of network access entities. An advantage thereof may be that it remains open how to implement the identification information in detail.

In a further advantageous embodiment of the invention, in response to the request from the second router, the first router transmits a request acknowledgment notification, comprising the identification information on the subset of the plurality of network access entities. Based on the identification information the second router may efficiently resolve the global network-layer addresses of the subset of the plurality of network access entities.

According to another embodiment of the invention, the request acknowledgment notification further comprises authorization, authentication and/or accounting information on the mobile node and/or information on Quality of Service parameters for the mobile node and/or information on security associations for the mobile node. Additional information may be exchanged between the first and second router, in order to get necessary information for configuring in the second router system resources and traffic parameters for the MN.

According to a further embodiment of the invention, the trigger for the request is the reception in the second router of a neighbor solicitation message from the mobile node destined to the first router, comprising address information of the first router and address information of the mobile node. Said neighbor solicitation message is a standard message already defined in the Neighbor Discovery protocol.

In an advantageous embodiment, the neighbor solicitation message is transmitted from the mobile node upon an attachment of the mobile node to the second network area. This is a time efficient way to trigger the neighbor solcitation message, otherwise, the mobile node would have to wait till a timer of an address prefix of the first router expires, before transmitting the NS message.

In an additional embodiment, the second router determines that the mobile node is new in the second network area by utilizing the address information of the mobile node in the neighbor solicitation message. The address information of the mobile node is utilized as an IP source address of the neighbor solicitation message. Furthermore, the second router identifies the first router by utilizing the address information of the first router in the neighbor solicitation message. The address information of the first router is utilized here as a target address of the neighbor solicitation message. An advantage may be that the second router is effectively provided with the necessary information. No additional signalling is necessary therefore.

According to an addition to previous embodiments, upon informing the subset of the plurality of network access entities, an acknowledgment notification is transmitted from each network access entity of the subset of the plurality of network access entities to the second router. Upon reception of the acknowledgment notifications in the second router, a connection is configured between the second router and each network access entity of the subset of the plurality of network access entities. The mobile node's data is directly transmitted through the established connection.

In a further addition to the previous embodiments of the invention, the mobile node utilizes a global network-layer address for each network access entity of the subset of the plurality of network access entities. Furthermore, a lifetime of each global network-layer address is updated. By updating the lifetime the global network-layer addresses do not expire and do not have to be newly configured.

According to an advantageous embodiment of the invention, the second router determines address prefix information on the subset of the plurality of network access entities. The identification information on the subset of the plurality of network access entities is utilized thereby. The updating of the lifetime of the global network-layer address is performed by transmitting a global network-layer address configuration message from the second router to the mobile node. Said global network-layer, address configuration message comprises the address prefix information on the subset of the plurality of network access entities. The mobile node is efficiently provided with the necessary address prefix information for further IP address configuration.

According to a further embodiment, the global network-layer address configuration message is a unicast router advertisement message. Thereby, the stateless address autoconfiguration in IPv6 networks is facilitated.

In another embodiment, the sending from the mobile node of a neighbor solicitation message, destined to the first router, is a first step of a Neighbor Unreachability Detection procedure. Said procedure is performed for the first router to determine whether the first router is reachable for the mobile node. In addition, a second and a third neighbor solicitation message, destined to the first router are transmitted from the mobile node. One possible advantage thereof is, that a already available uniqueness verification procedure like NUD may be utilized, without implementing a novel procedure in this respect.

In an addition to previous embodiments the first router is configured as a default router for the mobile node. The default router is a router to which outgoing data from the mobile node is to be transmitted. The global network-layer address configuration message further comprises address information of the second router. Consequently, upon reception of the global network-layer address configuration message, a default router list is updated utilizing the address information of the second router. Parallel to the address configuration, a default router may be configured.

According to a continued embodiment, upon updating the default router list, the second router is configured instead of the first router as the default router for the mobile node. Thereby, the mobile node is enabled in a short time to stop transmitting data to a router which is not reachable any more.

According to the invention, a router for exchanging data with a mobile node is provided. A plurality of network access entities route data to the router and to a second router. The mobile node is registered to a subset of the plurality of network access entities and moves from a second network area served by the second router to a first network area served by the router. A receiver within the router is adapted to receive a trigger from the mobile node. A processor is adapted to request, upon reception of the trigger, from the second router identification information on the subset of the plurality of network access entities. The processor is further adapted to inform the subset of the plurality of network access entities, to route data, destined for the mobile node, to the router.

According to the invention, a mobile node for communicating with a network via a router is provided. The mobile node is attached to a first network area, connected to a router. Within the network an attachment of the mobile node changes. A processor is adapted to detect the change of attachment of the mobile node. The processor is further adapted to generate, upon the detection of the change of attachment, at least one neighbor solicitation message, destined to the router. The at least one neighbor solicitation message comprises address information of the router and address information of the mobile node. A transmitter is adapted to transmit the at least one neighbor solicitation message, destined to the router.

According to the invention, a computer-readable medium is provided. The computer-readable medium stores instructions that, when executed by a processor of a second router, cause the second router to exchange data with a mobile node. The second router and a first router are connected to a plurality of network access entities. Additionally, the mobile node moves from a first network area served by the first router to a second network area served by the second router and is registered to a subset of the plurality of network access entities. In response to a trigger from the mobile node, the second router request from the first router identification information on the subset of the plurality of network access entities. In response to the request the subset of the plurality of network access entities is informed to route data, destined for the mobile node to the second router.

### BRIEF DESCRIPTION OF THE FIGURES

In the following the invention is described in more detail in reference to the attached figures and drawings. Similar or corresponding details in the figures are marked with the same reference numerals.
- **Fig. 1**: shows a mobile communication system according to one embodiment of the invention,
- **Fig. 2**: shows a signaling chart for managing the mobility of a mobile node according to embodiment of the invention,
- **Fig. 3**: shows an exemplary packet format of a request message according to the invention,
- **Fig. 4**: shows an exemplary packet format of a request acknowledgment message according to the invention,
- **Fig. 5**: shows a signaling chart for managing the mobility of a mobile according to another embodiment of the invention, and
- **Fig. 6**: shows a packet format of a neighbor solicitation message according to the invention.

### DETAILED DESCRIPTION OF THE INVENTION

The following paragraphs will describe various embodiments of the invention. For exemplary purposes only, most of the embodiments are outlined in relation to an IPv6 communication system and the terminology used in the subsequent sections mainly relates to the lPv6 terminology. However, the terminology and the description of the embodiments with respect to an IPv6 architecture is not intended to limit the principles and ideas of the inventions to such systems.

Also the detailed explanations given in the Technical Background section above are merely intended to better understand the mostly IPv6 specific exemplary embodiments described in the following and should not be understood as limiting the invention to the described specific implementations of processes and functions in the mobile communication network.

According to the invention, a subset of the plurality of network access entities may be defined as at least one of the plurality of network access entities and at most all of the plurality of network access entities.

Moreover, a trigger may be defined as a notification, message or event, upon which a predetermined step or method is conducted.

According to the invention, a network access entity may be defined as a gateway to the network-based localized mobility domain. The network access entity maintains location information for mobile nodes in the network-based localized mobility domain in order to tunnel the mobile nodes' traffic to the correct access router. The network access entity may also hold the globally routable IP prefixes deployed by the mobile nodes for configuration of their global unicast IP addresses. Therefore, the correspondent nodes see the network access entity as last hop router for a mobile node.

According to the invention, a neighbor solicitation (NS) message may be defined as a message sent by a node to perform mainly two actions. The first action may be to determine the link-layer address of a neighbour. The second action may be to verify that a neighbour is still reachable via a cached link-layer address. Neighbor Solicitations may also be used for Duplicate Address Detection.

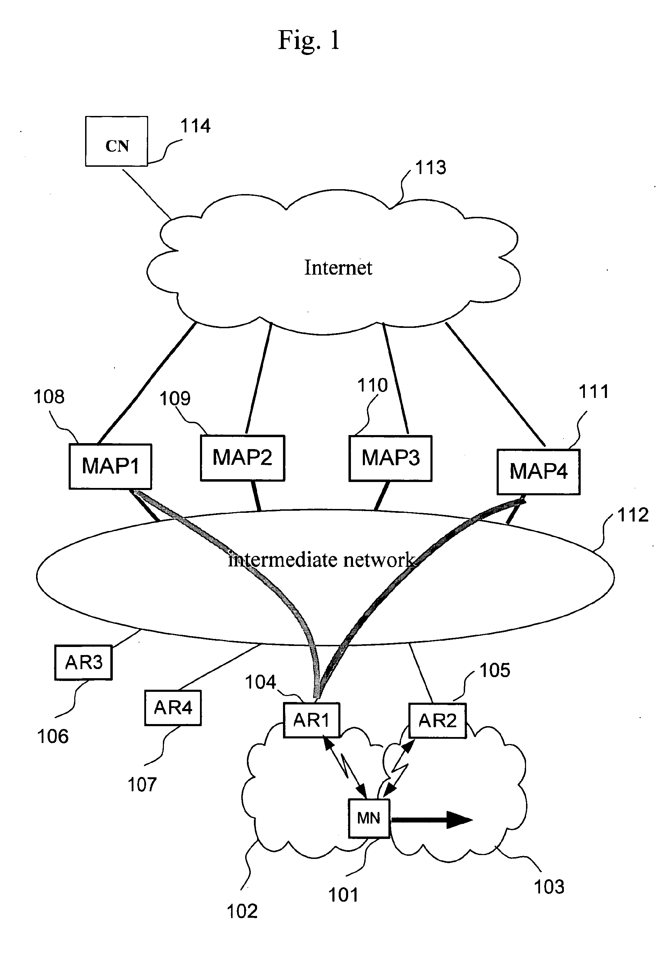

Fig. 1 shows a mobile communication system, wherein a mobile node (MN) 101 is located in a first network area 102. The MN is connected, presumably via a wireless channel, to an access router AR1 104, and exchanges data with AR1 through said channel. The MN may communicate with a corresponding node (CN) 114 or an application server (not shown) via multiple network access entities, that serve as entry points into the network or as gateways into the Internet 113. The network as it is illustrated in Fig. 1 is composed of four Mobility Anchor Points (MAP) 108-111, four ARs 104-107, and the mobile node 101. Additionally, an intermediate network 112 may be located between the ARs and the MAPs. For the method of the invention it is however of no importance whether a network is in between or not, as only appropriate routing shall be performed within the intermediate network 112. The connections between ARs and MAPS are like in a meshed network, where each AR may be connected to each MAP.

The presence of multiple MAPs in a network can help the network operator to perform load balancing for a great number of MNs. The MN 101 is presumably registered to two MAPs, namely MAP1 108 and MAP4 111. Accordingly, the MN 101 is communicating with AR1 104, that forwards data packets from the MN 101 to MAP1 108 or MAP4 111 via two separate tunnels.

The use of multiple MAPs for one mobile node may be advantageous, as for example one MAP may solely be used for real time based applications like voice calls or video conferencing, that demand a high and reliable data bandwidth. A further MAP may then be only used for real time insensitive applications like web-browsing or file downloading. According to the purposes for which the MAPs would be used by the MN, different Quality of Service (QoS) parameters and other parameters are configured in order to provide sufficient and an efficient capacity for the respectively established channels.

AR1 previously advertised the prefixes of MAP1 and MAP4 to the MN, who subsequently formed one global network-layer IP address for each MAP prefix. It is assumed that each MAP has an own IP prefix, which may be for example a subset of NETLMM domain's prefix or of another range of prefixes. It is further possible that one MAP possesses several prefixes, in which case a MN would configure a global IP address for each prefix of each MAP. A generated global IP address is based on the globally routable MAP prefix, because a global IP address needs to be reachable by any CN. The global IP address is mainly formed by appending an interface identifier of the mobile node to the received address prefix of the MAP.

Usually, the MN chooses one of the generated global lP addresses as data packet's source address for transmitting a packet to a particular CN. When the data packets arrive at the AR, the AR may inspect the packets' source IP addresses and based on that may decide, to which MAP to transmit the packet. For instance, packets that are transmitted within a video conference application, are then sent to MAP4, because the MN utilized the global IP address, that was formed by utilizing the prefix of MAP4, as the source address of the packets. On the other hand, the source address of packets transmitted for web-browsing is the global lP address configured with the prefix of MAP1, thereby AR decides to transmit these packets to the CN via MAP1.

A CN receives the data packets from the MN comprising a specific source IP address. The CN transmits data packets to the MN automatically to the "correct" MAP by utilizing the source IP address of the incoming data packets as the destination IP address of outgoing data packets for the MN.

As mentioned above, the MN 101 is currently served by AR1 104, that routes data packets from the MN either to MAP1 or to MAP4, depending on the source IP address of the data packets. Furthermore, the MN 101 moves from the first network area 102 to a second network area 103, that is served by AR2 105.

Accordingly, the MN 101 has to conduct a link-layer (Layer 2) handover to establish new connectivity with AR2 and a network-layer (Layer 3) handover for informing the MAPs about the new location of the MN 101. The location of the MN has to be updated so that the MAPs route incoming data, destined for the MN, to the new router AR2 105, instead of to the old router AR1 104. AR1 104 is no longer reachable for the MN 101, because the MN has left the coverage area of AR1 and is now located within the range of AR2. However, as the MN is not registered to all MAPs in the network it is more efficient to transmit the MN's location update to only those MAPs, to which the MN is registered.

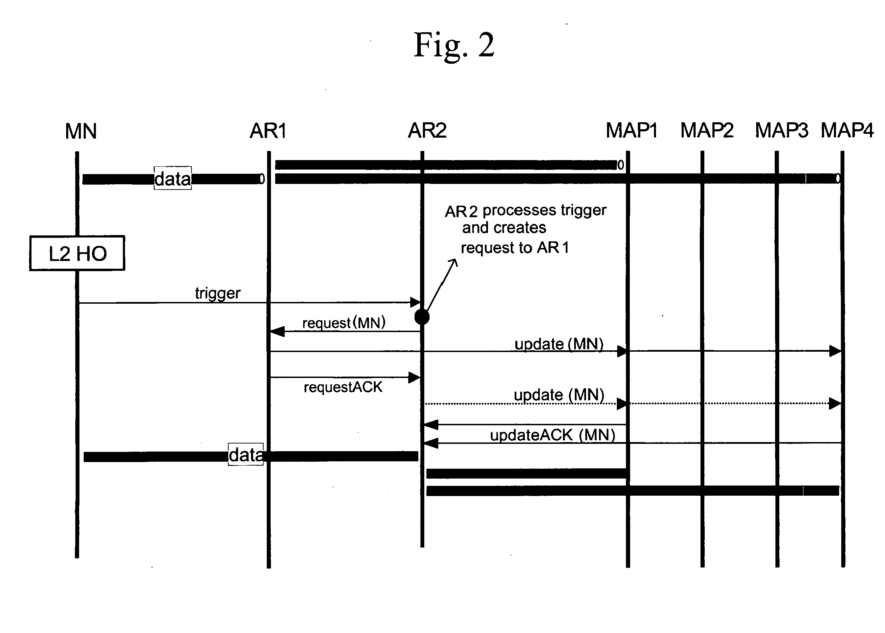

Fig. 2 shows a signaling procedure, wherein the MAPs, to which the MN is registered, are informed about the new location of the MN. At first the MN is receiving data from the AR1, that forwards the data from MAP1 and MAP4. Presumably, the MN leaves the reception area of AR1 and enters the radio cell of AR2. Consequently, a Layer 2 Handover (HO) is conducted.

The mobile node utilizes the completion of the Layer 2 handover for transmitting a trigger into the network. However, the MN may also transmit the trigger after receiving in the mobile node an IP address configuration message from the new router, e.g. the second router. The second router receives this trigger from the MN, and generates and sends a request to the previous access router AR1 of the MN to obtain information on the MAPs to which the MN is registered. At the beginning, this information is not yet available in the new router AR2, therefore the request.

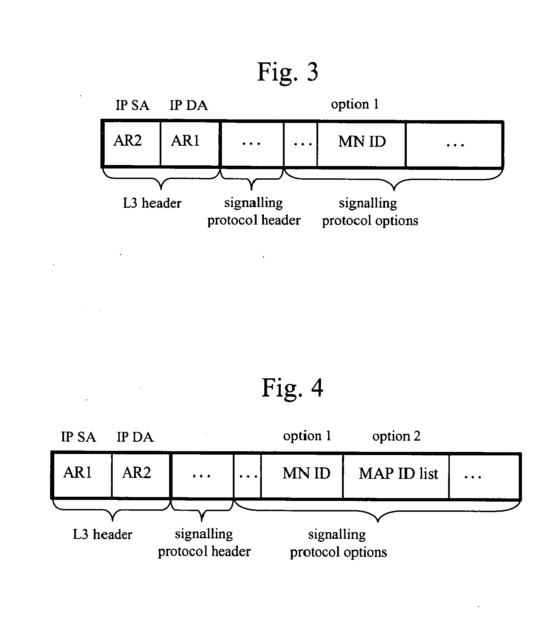

The request may be transmitted via a request message, wherein an exemplary packet format is illustrated in Fig. 3. The request message may be transmitted utilizing various transmission protocols. Therefore, the signaling protocol header that is dependent on the used protocol is not explicitly specified in the packet format of Fig. 3. The layer 3 header is composed of two fields, at first, the IP source address (IP SA), which accordingly contains the global IP address of AR2 as the message is transmitted from the new router. Furthermore, the IP destination address (IP DA) contains the global unicast IP address of the previous AR1. In addition, within a field of the signaling protocol message an identification information of the MN is inserted, in this case the MN's ID.

The AR1 receives the request from AR2 and knows which MAPs were serving the MN. Consequently, AR1 may inform the respective MAPs, here MAP1 and MAP4, to route data destined for the MN to AR2. It is further advantageous that no data is further transmitted to AR1 as the MN is not located in its reception area anymore.

It is also possible that the informing of the registered MAPs is conducted by the new router AR2. In this regard, the old AR1 may further generate and send a request acknowledgement message to AR2, comprising the requested identification information about which MAPs serve the MN.

An exemplary request acknowledgment message is shown in Fig. 4. Again, it remains open which signaling protocol is used for transmitting the message to AR2. Accordingly, only the Layer 3 header is specified in more detail. In this case, the IP SA is the global IP address of AR1 and the IP DA is the global IP address of AR2. Furthermore, the message contains identification information on the MN and the requested identification information on the subset of network access entities the MN is registered to. In an embodiment, a MAP ID list, including all MAPs to which the mobile node is registered, is utilized for complying the request.

The signalling protocol between AR1 and AR2 that can be used for exchanging the request and the request acknowledgment message may be, for example, based on existing protocols like CXTP (Context Transfer Protocol) or SCTP (Stream Control Transmission Protocol). If this is the case, new extensions would be needed to be defined for said protocols. It is also possible to use the same protocol, that is used as the transmission protocol for signaling between AR and MAP. Accordingly, new options and/or signaling message types would have to be defined, in order to fulfill the purpose of the information exchange between AR1 and AR2. In addition, a completely new protocol, may also be used, however, it is outside the scope of this invention to define the protocol.

AR2 upon receiving said request acknowledgment message from AR1, is enabled to perform the location update. In this case, AR2 may inform MAP1 and MAP4 to route data for the MN to AR2. This second option, is illustrated with a dashed line in Fig. 2.

In either case, the MAPs, upon receiving the location information update, further transmit an acknowledgment message back to the new router AR2. Subsequently, data is transmitted from the MAPs, MAP1 and MAP4, to the second router AR2, that accordingly forwards the incoming data to the MN.

In the following, the invention is implemented in an IPv6 compliant network architecture. However, this shall not be understood as a restriction to the principles and ideas of the invention.

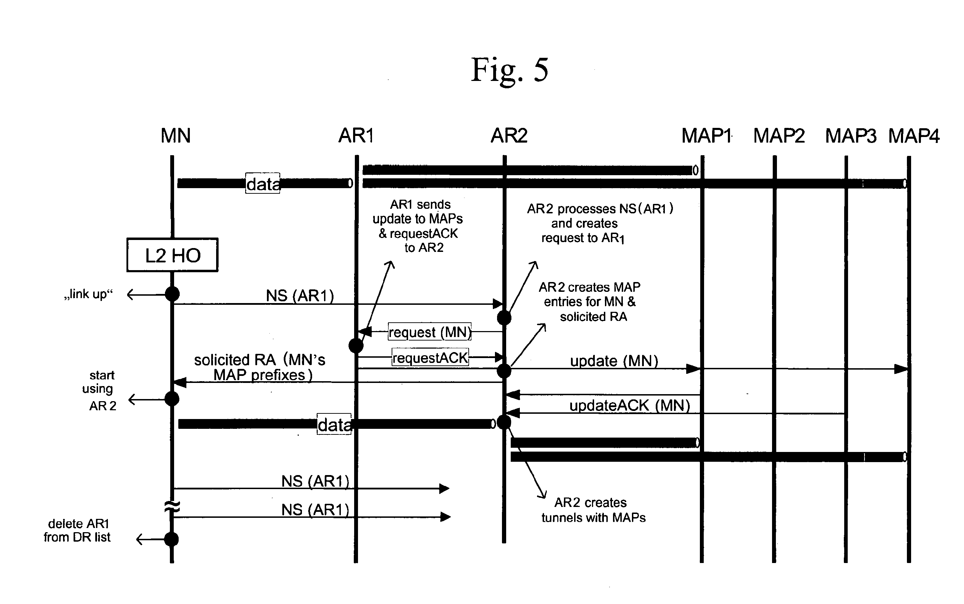

Fig. 5 shows a signaling chart for managing the mobility of a mobile node, that handovers from an AR1 to an AR2. Previously, the MN receives the data via AR1 from MAP1 and MAP4.

When the MN moves to the area of another AR, it first undergoes a L2 handover. It is advantageous that the MN is modified to send a Neighbor Solicitation (NS) message for AR1, immediately after a "link up" event, indicating the completion of L2 handover.

Neighbor Solicitation messages are sent by a node to perform mainly two actions. First, to determine the link-layer address of a neighbor or, second, to verify that a neighbor is still reachable via a cached link-layer address. Neighbor Solicitations may also be used for Duplicate Address Detection.

It is further advantageous that the NS message is transmitted as a first step of a neighbor unreachability detection (NUD).

IPv6 nodes use a Neighbor Discovery (ND) protocol, the NUD procedure being part of the ND protocol, to resolve the link-layer addresses for neighbors, which reside on the same IP link as the host. Further, ND protocol can be used to identify if already known neighbors are still available on the link. Hosts also use ND to find neighboring routers that are willing to forward packets on their behalf. When a router or the path to a router fails, a host actively searches for other functioning routers.

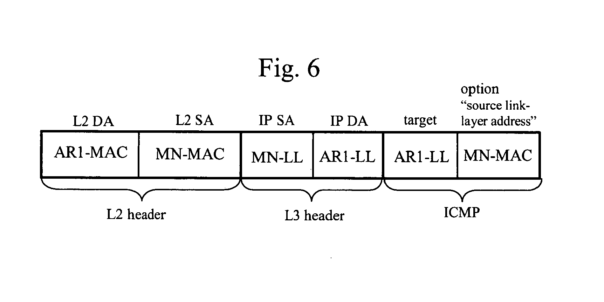

Fig. 6 shows an exemplary packet format of a neighbour solicitation message. The link-layer destination address (L2 DA) in the L2 header is the AR1's unicast link-layer address, which may be the MAC-address of the router, according to a usual implementation in lPv6. The IP destination address (IP-DA) of the NS message in the L3-header is the AR1's link-local address. The lP source address (lP-SA) of the NS message in the L3-header is the MN's link-local address.

It may also be required that the MN includes its link-layer address, in the "Source Link-Layer Address" option, which for a specific implementation might be the MN-MAC address. The presence of this option allows AR2 to include the MN in its Neighbor Cache, which allows the new router AR2 to forward incoming packets, destined to the IP address of the mobile node, to the link-layer address of the mobile node. However, this advantageous embodiment is not essential for the functioning of the invention. The link-layer address of the mobile node can also be included in a different field of the NS message.

The link-layer interface of the new AR, in this case AR2, may further be configured in a promiscuous mode, i.e. to accept link-layer messages that are not destined to its link-layer address or to a multicast address.

However, in order to limit the processing of the packets at the higher layers, e.g. at the IP layer, the new AR can implement a filtering function, only passing packets through, which have been destined to a predefined list of routers. These routers could be the neighbouring ARs of the new router, from which MNs may move to a new router. The list of neighbouring ARs may be manually configured by a network operator. However, this consideration is advantageous and not essential for the functioning of the invention.

The AR2's lP layer receives the NS message from the mobile node, which was destined to the current default router AR1 of the mobile node. The AR2 recognizes from the lP source address of the received NS message that the MN is a new one for the network area of AR2. Furthermore, the AR2 is able to determine from the IP destination address that the MN's previous AR is AR1. In this regard, AR2 holds information, for example in an internal list, about associations between the link-local (LL) address of routers and its correspondent global unicast lP address. Hence, by matching the AR1'S LL-address of the NS message in said internal database it is possible for the AR2 to resolve the global IP address of AR1.

The new router AR2 is modified to send as soon as possible a request message to the old router AR1, that is directed to the just resolved AR1's global unicast IP address. The request message includes a query for information about which MAPs are serving the MN. The packet format of the request message is illustrated in Fig. 3 and was already discussed.

AR1 is configured to receive such "request" message and to process it by checking an internal database about MNs in AR1, where information of all registered MNs is stored. Upon finding a match for the requested MN, AR2 may generate an update location message for those MAPs determined to serve the MN, identified by the MN identification information in the request message. In this case, the option is conducted in which the old AR, AR1, informs the MAPs about the new location of the MN.

In addition, a response to the request is prepared by AR1. A request acknowledgment message, illustrated in Fig. 4, contains identification information about all MAPs serving the MN. This identification information may be of various kinds. It may be the address prefixes of the MAPs, or the global IP addresses or ID parameters of the MAPs. In each case, the message is transmitted to the new serving router, AR2, and AR2 is able to process said request acknowledgment message. After AR2 receives the request acknowledgement message, it includes the MN in an internal database, similar to the database used in AR1.

In case the option is performed, in which the new AR informs the MAPs registered for the MN, AR2 possesses the means to resolve the global IP address of each MAP. For example, by consulting a pre-configured internal database, AR2 determines the global IP addresses utilizing the prefix address or the ID parameters, received in the request acknowledgement message. In case AR2 receives the global IP addresses of the correspondent MAPs no further determination is necessary. The new Access Router is now enabled to transmit a location update, concerning the MN, to all MAPs with which the MN exchanges data (not shown). The MAPs are thus notified to route data for the MN to the new AR2.

The MN utilizes for each MAP, to which it is registered, a different global unicast IP address. It is advantageous that the MN does not change said IP addresses after a handover. Furthermore, the global IP addresses each posses a lifetime value, indicating a period of time in which said global IP addresses are used for higher layer sessions. If the lifetime value of an IP address expires, the address may be changed to deprecated state or may become invalid. In order to update said IP addresses, AR2 is modified to generate a unicast Router Advertisement (RA) message, comprising prefix address information on each of the registered MAPs. The generated RA message is similar to a solicited unicast RA message, generated upon the reception a Router Solicitation message. Normally, Router Advertisement messages are sent by routers to advertise their presence together with various link and Internet parameters. RA message is sent either periodically, or in response to a Router Solicitation message. RAs contain prefixes that are used for on-link determination and/or address configuration, a suggested hop limit value, etc..

As AR2 may receive various kinds of information about the registered MAPs from the old router AR1 with the request acknowledgment message, it might be necessary to first determine the prefix addresses utilizing for example an internal database, that may be configured by a network operator.

For the purposes of registering the MN in only the specified MAPs and configuring only lP addresses for the mobile node for the MAPs to which it is registered, the RA messages may be configured in the following way. The unsolicited multicast RA includes no prefix option, so that it is solely used by MNs to update their default router. The solicited unicast RA message includes always the prefix option and is sent unicast to a MN having requested it in order to configure/update its IP addresses. The solicited RA includes only the prefix of the MAPs, which will serve or already serve the MN. Thereby, it is possible to advertise only those prefixes of the MAP to the MN. Unsolicited multicast RA sent from the AR are not usable for lP address configuration, as they do not contain the prefix address. Thereby, the MN only configures the lP addresses for the serving MAPs. It is also possible that multiple prefixes are owned by one MAP. In this case, the RA message would contain all prefixes of each MAP, to which it is registered.

The "M" flag (managed address configuration flag) in the unicast RAs may be set to "0", meaning that stateless address autoconfiguration has to be used by the MN to configure its global lP address. In this invention, stateless address autoconfiguration may be assumed because it is faster than stateful one and there is no need of a central server in the network. The "A" flag (autonomous address-configuration flag) must be set, in order to indicate that the included prefix can be used for autonomous address configuration by the MN. Further, it is assumed that the "L" flag (on-link flag) should be set to "0". If the "L" is set to "0", the MN transmits all packets to the AR, independent if the destination address is on-link or off-link. If "L" flag is set to "1", then the MN would transmit packets, having the same prefix as the MN's one directly to the destination and not to the AR.

As already mentioned, the AR2 transmits a unicast RA message to the MN, thereby advertising the prefixes of the MAPs, whose lDs were received within the request acknowledgement message. The unicast RA message is used by the MN to update the lifetime of its IP addresses and a default router list.

More specifically, the RA message updates the lifetime of the advertised prefixes, i.e. the prefixes of the respective MAPs. The lifetime of the global IP addresses of the MAPs is thereby only updated indirectly.

After the location update messages are received at the MAPs serving the MN, MAP1 and MAP4, the MAPs update their internal databases with the new location of the MN, i.e. changing the MN's location from AR1 to AR2. Consequently, they send an update acknowledgment message to AR2.

In AR2, upon reception of an update acknowledgment message from a MAP serving the MN, AR2 sets up a tunnel to this MAP. AR2 expects to receive update acknowledgment messages from all MAPs, which have been reported by AR1 in the request acknowledgment message. In this case, separate tunnels are established between MAP1 and AR2 and between MAP4 and AR2.

As briefly mentioned above, the unicast RA message transmitted from the AR2 to the MN may be further used to update a default router list. In an IPv6 network, the default router is a next-hop router, which is known to be reachable on the same IP link and to which packets are sent when the correspondent node is not on the same IP link. In the RA message sent by the access routers, if the "on-link" flag is configured to "0", all MNs would send all data packets to the default router, independent of the location of the corresponding node.

A default router list contains routers to which packets may be sent. Router list entries point to entries in the Neighbor Cache, that stores link-local unicast lP addresses of nodes connected to a sub-network network and contains information, like for example their link-layer addresses and a flag indicating whether the neighbor is a router or a host. The algorithm for selecting a default router favors routers known to be reachable over those whose reachability is suspect. Each entry also has an associated invalidation timer value, extracted from Router Advertisements messages, used to delete entries, that are no longer advertised.

On the bottom of Fig. 5 it is depicted that the MN continues to send 2 more NS messages destined to AR1. This is a part of the NUD procedure for AR1 performed by MN.

In case the mobile node continues to send NS messages destined to its former default router, AR1, it is further important that a router, in this case AR2, that receives the NS messages only processes the respectively fist message, containing address information of the mobile node and of the first router, AR1. If further NS messages are received in the new router AR2, which are directed to the same router, AR1, and are received from the same mobile node, the AR2 should ignore these further NS messages and drop them. Consequently, only the first message is properly processed by a router, thereby transmitting a request message to the old AR, AR1.

In a preferred embodiment of the invention, the mobile node continues to perform NUD procedure, which includes further sending two additional NS messages destined for AR1. Correspondingly, some time after receiving the RA message the mobile node transmits the remaining two NS messages and waits for a proper response from its previous default router. However, as no solicited response is received in the mobile node, the NUD is completed and the MN determines, that its previous default router, AR1, is not reachable and deletes the AR1 entries in the Neighboring Cache and in the Default Router List.

Hence, after completing the NUD, the MN may select a new entry in the Default Router List for the default router, thereby choosing the most recent entry of AR2.

It is further advantageous to exchange between the AR1 and AR2 other information than the identification information on the MAPs, the MN is registered to. It is also possible to append security information of the MN to the request acknowledgment message, sent from AR1 to AR2. Authorization parameters, information on authentication, accounting, encryption, decryption codes or Quality of Service parameters, that were previously used for the MN may be appended to the request acknowledgment message and transmitted to the new router, AR2. Accordingly, the request message from AR2, would then further contain a query for said additional and advantageous information, wherein the AR1 complies by including said requested information in the response notification.

According to the method of the invention, less signaling in the NETLMM domain is necessary for handover, because the method proposes unicast signaling from AR1 to the MAPs serving the MN instead of multicast signaling from AR2 to all MAPs.

A faster MN update at handover is also provided by the invention, because AR2 needs less time before sending a unicast RA message to the MN, with the prefixes of the MAPs serving the MN. The router is enabled to generate a global network-layer address configuration message for the MN without prior reception of a router solicitation message from the MN. Furthermore, no central server is needed, as the necessary information is provided from the old router.

Furthermore, changes are only needed on the network side ARs, which is required by the NETLMM framework.

Another embodiment of the invention relates to the implementation of the above described various embodiments using hardware and software. It is recognized that the various embodiments of the invention above may be implemented or performed using computing devices (processors), as for example general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the present invention may also be implemented by means of software modules which are executed by a processor or directly in hardware. Also a combination of software modules and a hardware implementation may be possible. The software modules or instructions may be stored on any kind of computer readable storage media, for example RAM, EPROM, EEPROM, flash memory, registers, hard disks, CD-ROM, DVD, etc.

## Claims

1. A method for managing mobility of a mobile node (101) within a network comprising a plurality of network access entities (108, 109, 110, 111) routing data to a first router (104) and a second router (105), wherein the mobile node is registered to a subset of the plurality of network access entities (108, 111), wherein the mobile node moves from a first network area (102) served by the first router to a second network area (103) served by the second router and the method comprises the steps of:
in response to a trigger from the mobile node, requesting by the second router from the first router, identification information on the subset of the plurality of network access entities, and
in response to the request, informing the subset of the plurality of network access entities to route data, destined for the mobile node to the second router.

2. The method of claim 1, wherein the step of informing the subset of the plurality of network access entities is performed by the first router.

3. The method of claim 1, wherein the step of informing the subset of the plurality of network access entities is performed by the second router.

4. The method of one of claims 1-3, wherein the identification information on the subset of the plurality of network access entities comprises an address prefix or a global network-layer address or an identification parameter of each network access entity of the subset of the plurality of network access entities.

5. The method of one of claims 1-4, wherein in response to the request from the second router, the first router transmits a request acknowledgment notification, comprising the identification information on the subset of the plurality of network access entities.

6. The method of claim 5, wherein the request acknowledgment notification further comprises authorization information, authentication and/or accounting on the mobile node and/or information on Quality of Service parameters for the mobile node.

7. The method of one of claims 1-7, wherein the trigger for the request is the reception in the second router of a neighbor solicitation message from the mobile node destined to the first router, comprising address information of the first router and address information of the mobile node.

8. The method of claim 7, wherein the neighbor solicitation message is transmitted from the mobile node upon an attachment of the mobile node to the second network area.

9. The method of one of claims 7-8, further comprising the steps of:
determining, in the second router, that the mobile node is new in the second network area by utilizing the address information of the mobile node in the neighbor solicitation message, wherein the address information of the mobile node is utilized as an IP source address of the neighbor solicitation message, and
identifying, by the second router, the first router by utilizing the address information of the first router in the neighbor solicitation message, wherein the address information of the first router is utilized as a target address of the neighbor solicitation message.

10. The method of one of claims 1- 9, further comprising the step of:
upon informing the subset of the plurality of network access entities, transmitting an acknowledgment notification from each network access entity of the subset of the plurality of network access entities to the second router, and
upon reception of the acknowledgment notifications in the second router, configuring a connection between the second router and each network access entity of the subset of the plurality of network access entities.

11. The method of one of claims 1-10, wherein the mobile node utilizes a global network-layer address for each network access entity of the subset of the plurality of network access entities, and the method further comprises the step of:
updating a lifetime of each global network-layer address.

12. The method of claim 11, wherein the second router, determines address prefix information on the subset of the plurality of network access entities utilizing the identification information on the subset of the plurality of network access entities, wherein the updating of the lifetime of the global network-layer address is performed by transmitting a global network-layer address configuration message from the second router to the mobile node, comprising the address prefix information on the subset of the plurality of network access entities.

13. The method of claim 12, wherein the global network-layer address configuration message is a unicast router advertisement message.

14. The method of one of claims 7-13, wherein the step of sending from the mobile node a neighbor solicitation message, destined to the first router, is a first step of a Neighbor Unreachability Detection procedure, being performed for the first router to determine whether the first router is reachable for the mobile node, and the method further comprises the step of:
transmitting from the mobile node a second and a third neighbor solicitation message, destined to the first router.

15. The method of claim 12, wherein the first router is configured as a default router for the mobile node, the default router being a router to which outgoing data from the mobile node is to be transmitted, and the global network-layer address configuration message further comprises address information of the second router, and the method further comprises the steps of:
upon reception of the global network-layer address configuration message, updating a default router list utilizing the address information of the second router.

16. The method of claims 14 and 15, further comprising the step of:
upon updating the default router list, configuring the second router instead of the first router as the default router for the mobile node.

17. A router (105) for exchanging data with a mobile node (101), wherein a plurality of network access entities (108, 109, 110, 111) route data to the router and to a second router (104), wherein the mobile node is registered to a subset of the plurality of network access entities (108, 111) and the mobile node moves from a second network area (102) served by the second router (104) to a first network area (103) served by the router (105), the router comprising:
a receiver adapted to receive a trigger from the mobile node,
a processor adapted to request, upon reception of the trigger, from the second router identification information on the subset of the plurality of network access entities,
the processor further adapted to inform the subset of the plurality of network access entities, to route data, destined for the mobile node, to the router (105).

18. The router of claim 17; wherein the receiver is further adapted to receive an information acknowledgment notification from each network access entity of the subset of the plurality of network access entities as a response to the informing from the router (105), and
the processor is further adapted to configure, upon reception of the information acknowledgement notification, a connection to each network access entity of the subset of the plurality of network access entities.

19. The router of one of claims 17-18, wherein the trigger for the request is the reception of a neighbor solicitation message from the mobile node, destined to the second router (104), comprising address information of the second router and address information of the mobile node, and
the processor is further adapted to process the neighbor solicitation message.

20. The router of claim 19, wherein the neighbor solicitation message is a first neighbor solicitation message and
the receiver is further adapted to receive, after the reception of the first neighbor solicitation message, comprising address information of the second router (104) and of the mobile node, a plurality of neighbor solicitation messages, destined to the second router (104), comprising address information of the second router and of the mobile node, and
the processor is further adapted to ignore the plurality of neighbor solicitation messages, comprising address information of the second router and of the mobile node, received after the first neighbor solicitation message.

21. The router of claim 19, the processor further adapted to resolve a global network-layer address of the second router (104) utilizing the address information of the second router comprised in the neighbor solicitation message.

22. The router of one of claims 17-21, wherein the request to the second router (104) comprises identification information of the mobile node.

23. The router of one of claims 17-22, the receiver further adapted to receive a request acknowledgment message from the second router (104) as a response to the request, comprising the identification information on the subset of the plurality of network access entities, and
the processor is further adapted to update a mobile node database, comprising associations between mobile nodes and network access entities, by utilizing the identification information on the subset of the plurality of network access entities.

24. The router of claim 23, wherein the processor is further adapted to determine address prefix information of the subset of the plurality of network access entities utilizing the identification information, the processor is further adapted to generate, upon reception of the request acknowledgment message, a global network-layer address configuration message for the mobile node, comprising the address prefix information on the subset of the plurality of network access entities, and
a transmitter adapted to transmit the global network-layer address configuration message to the mobile node.

25. A router for exchanging data with a mobile node, wherein a plurality of network access entities (108, 109, 110, 111) route data to the router (104) and to a second router (105), wherein the mobile node is registered to a subset of the plurality of network access entities (108, 111), wherein the mobile node moves from a first network area (102) served by the router (104) to a second network area (103) served by the second router(105), the router comprising:
a receiver adapted to receive a request from the second router, for identification information on the subset of the plurality of network access entities,
a processor adapted to generate, upon the request from the second router, a request acknowledgment message for the second router (105), comprising the identification information on the subset of the plurality of network access entities, and
a transmitter adapted to transmit the request acknowledgement message to the second router.

26. The router of claim 25, wherein the processor is further adapted to inform, upon the request from the second router (105), the subset of the plurality of network access entities to route data, destined for the mobile node, to the second router.

27. A mobile node (101) for communicating with a network via a router (104, 105), the mobile node is attached to a network area (102, 103), connected to the router, and, wherein within the network an attachment of the mobile node changes, and the mobile node comprises:
a processor adapted to detect the change of attachment of the mobile node and the processor is further adapted to generate, upon the detection of the change of attachment, at least one neighbor solicitation message, destined to the router, comprising address information of the router and address information of the mobile node, and
a transmitter adapted to transmit the at least one neighbor solicitation message, destined to the router.

28. A mobile communication system comprising a router according to claim one of claims 17 to 26 and a mobile node according to claim 27.

29. The mobile communication system according to claim 28, wherein the router and the mobile node are adapted to perform the steps of the method according to one of the claims 2 to 16.

30. A computer-readable medium storing instructions that, when executed by a processor of a second router (105), cause the second router to exchange data with a mobile node (101), wherein the second router and a first router (104) are connected to a plurality of network access entities (1.08, 109, 110, 11) and the mobile node moves from a first network area (102) served by the first router to a second network area (103) served by the second router and is registered to a subset of the plurality of network access entities (108, 111), by:
in response to a trigger from the mobile node, requesting by the second router from the first router, identification information on the subset of the plurality of network access entities, and
in response to the request, informing the subset of the plurality of network access entities to route data, destined for the mobile node to the second router.
